# EUROPEAN PATENT SPECIFICATION

(11) **EP 3 204 839 B1**
(45) Date of publication and mention of the grant of the patent: **17.02.2021**
(21) Application number: 15788210.1
(22) Date of filing: 07.10.2015
(51) Int. Cl.: G06F 3/044

(54) **DIGITIZER SENSOR**
DIGITALISIERER-SENSOR
CAPTEUR DE NUMÉRISEUR

(30) Priority: 07.10.2014 US 201462060584 P
(43) Date of publication of application: 16.08.2017
(73) Proprietor: Microsoft Technology Licensing, LLC, Redmond, WA 98052 (US)
(72) Inventor: GUR, Arie, 5529349 Kiryat-Ono (IL)
(74) Representative: CMS Cameron McKenna Nabarro Olswang LLP
(86) International application number: PCT/IB2015/057656
(87) International publication number: WO 2016/055944

(56) References cited:
- US-B1- 8 525 799

## Description

### BACKGROUND

Capacitive sensors are used for position and proximity detection in many Human Interface Devices (HID) that include touch-screens such as laptops, trackpads, MP3 players, computer monitors, and smart-phones. Capacitive sensors sense positioning and proximity of a conductive object such as a conductive stylus or finger touch used to interact with the HID. Typically, capacitive sensors are sensitive both to the size and the proximity of the interacting object.

Capacitive sensors include electrodes that can be constructed from different media, such as copper, Indium Tin Oxide (ITO) and printed ink. ITO is typically used to achieve transparency. Some capacitive sensors are grid based and are operated to detect mutual capacitance between the electrodes at different points or junctions in the grid. US8525799 teaches an apparatus and a method for resolving locations of two or more substantially simultaneous touches on a split touch sensor device. The method may include detecting multiple substantially simultaneous touches on a touch-sensor device having multiple sections in at least one dimension of the touch-sensor device, and resolving locations of the multiple substantially simultaneous touches on the touch-sensor device without an all-points-addressable (APA) array. Resolving the multiple locations includes resolving a first location in a first section of the multiple sections and resolving a second location in a second section that is adjacent to the first section of the touch-sensor device. The apparatus may include a first set of sensor elements disposed in a first axis in a plane of a touch-sensor device, and a second set of sensor elements and a third set of sensor elements disposed in a second axis in the plane.

### SUMMARY

The invention is defined according to the independent claim. Further advantageous embodiments of the invention are defined in the dependent claims.

Typically, the resolution of a grid based capacitive sensor is defined by the number of junctions formed between row and column antennas. According to an aspect of some embodiments of the present disclosure there is provided a pattern for a grid based capacitive sensor that reduces the number of antennas needed to form a given number of junctions. According to some embodiments of the present disclosure, all of the antennas that form the grid extend from one edge of the sensor and connect via metal traces to circuitry from only that one edge. Optionally, the other edges of the sensor are free of metal traces and can extend toward an edge of an electronic display with substantially no black print area on at least three edges of the electronic display. The reduced number of antennas included in the pattern may reduce the cost and/or bill of materials of circuitry for operating the sensor.

According to an aspect of some embodiments of the present disclosure there is provided a touch screen formed with a plurality of independent grid based capacitive sensors that can be operated separately or together. In some exemplary embodiments, at least a portion of the independent capacitive sensors include a pattern that provides for connecting to the sensing antennas from along one edge of the sensor. Optionally, the plurality of independent sensors may be arranged to form an oblong or large sensing area without compromising resolution and refresh rate.

Unless otherwise defined, all technical and/or scientific terms used herein have the same meaning as commonly understood by one of ordinary skill in the art. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIGS. 1A and 1B are simplified schematic drawings of a known and an exemplary grid pattern for a digitizer sensor respectively in accordance with some embodiments of the present disclosure;
FIG. 2 is simplified schematic drawing of an exemplary grid pattern for a digitizer sensor in a landscape configuration in accordance with some embodiments of the present disclosure;
FIGS. 3A and 3B are simplified schematic drawings identifying exemplary junctions of an exemplary grid pattern of a digitizer sensor receiving input and a numbering system for tracking movement across the digitizer sensor based on the inputs, all in accordance with some embodiments of the present disclosure;
FIG. 4 is a simplified schematic drawing of an exemplary grid pattern including sensing lines that improve resolution near edges of the sensing area in accordance with some embodiments of the present disclosure;
FIG. 5 is a simplified schematic drawing of an exemplary diagonal grid pattern with improved resolution along edges in accordance with some embodiment of the present disclosure;
FIG. 6 is a simplified schematic drawing of an exemplary grid pattern formed from a plurality of independent sensing sections in accordance with some embodiments of the present disclosure;
FIG. 7 is a schematic illustration of exemplary junctions for a grid pattern of a digitizer sensor in accordance with some embodiments of the present disclosure; and
FIG. 8 is a simplified block diagram of a digitizer system in accordance with some embodiments of the present disclosure.

### DETAILED DESCRIPTION

According to some embodiments of the present invention, a grid based capacitive sensor includes antennas that extend along a first direction, bend and then continue along a second direction. Optionally, the antennas extend from one edge of the sensor at an angle toward one of two neighboring edges and then bend away from the edge. Antennas that bend away from one edge cross with other antennas that bend away from the same edge or from an opposite edge to form a grid of junctions. Optionally, the antennas are an array of 'L' shaped antennas that cross each other. Junctions across an antenna can be formed on both sides of the bend. The additional antenna length afforded by the bend increases the number of junctions that can be formed with each antenna. Optionally, the pattern additionally includes a pair of antennas that extend along opposite edges of the sensing area to improve resolution near the edges. Optionally, a portion of the 'L' shaped antenna extends along one of the neighboring edges. Optionally, an antenna pattern is defined so that each antenna crosses most or all the other antennas once. The antennas may be patterned on a single layer using a one-glass solution including bridges that provide for capacitive coupling of the antennas at the junctions.

Optionally, all the antennas of the sensor extend from one edge of a sensing area. Based on such an arrangement, a plurality of sensors can be placed side by side to establish a larger sensing area formed for a plurality of independent sensors. Optionally, the plurality of sensors can be operated in coordination to provide for seamless sensing across a full extent of the larger sensing area.

According to some embodiments of the present invention, the grid based capacitive sensor is suitable to detect fingertip input and the like with mutual capacitive detection. In some exemplary embodiments, during mutual capacitive detection, circuitry associated with the antenna triggers or injects a signal on an antenna to initiate capacitive coupling at one or more junctions and samples capacitively coupled signals at the one or more other junctions. The triggering and the sampling of an antenna can occur at the same time. Optionally, all the antennas are both triggered and sampled. According to some embodiments, the grid based capacitive sensor is suitable to track an object, e.g. stylus based on signals emitted by object and detected by the sensor.

Before explaining at least one embodiment of the exemplary embodiments in detail, it is to be understood that the disclosure is not necessarily limited in its application to the details of construction and the arrangement of the components and/or methods set forth in the following description and/or illustrated in the drawings. The disclosure is capable of other embodiments or of being practiced or carried out in various ways.

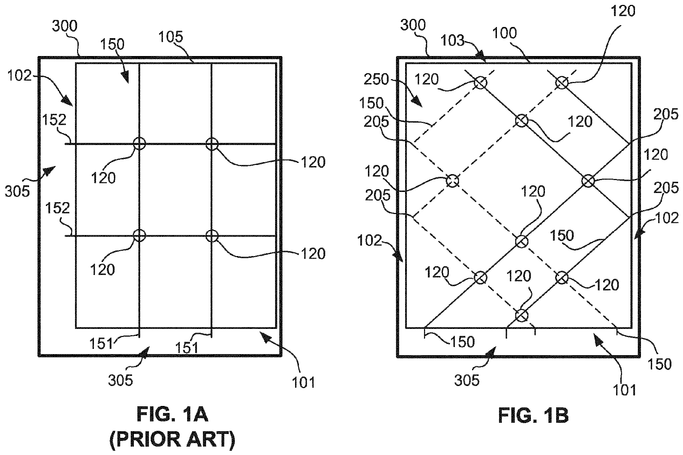

Reference is now made to FIGS. 1A and 1B showing simplified schematic drawings of a known grid pattern and an exemplary grid pattern for a digitizer sensor respectively in accordance with some embodiments of the present disclosure. Known grid based capacitive sensors include a pattern 150 with row antennas 152 and column antennas 151 that spread across a sensing area 105 and cross to form junctions 120. Row antennas 152 connect to circuitry from along edge 101 of sensing area 105 and column antennas 151 connect to circuitry from along edge 102 of sensing area 105. Typically sensing area 105 is narrowed as compared to a display panel area 300 to accommodate for connecting row antennas 152 along edge 102 and column antennas 151 along edge 101 to circuitry. Sensing area 105 may also typically be narrowed along facing edges for symmetry purposes. Typically, areas 305 along edge 101 and 102 are patterned with metal traces that connect the antennas to circuitry. Optionally, areas 305 are printed with black print to conceal the metal traces and/or circuitry.

During mutual capacitance detection, input at junctions 120 is detected by injecting a signal on antennas 152 one at a time and sampling output from column antennas 151. Alternatively, column antennas are triggered one at a time (by injecting a signal) and row antennas are sampled. The number of junctions provided by this grid pattern is defined by the number of rows antennas multiplied by the number of column antennas. Optionally, antennas 152 are triggered in groups with orthogonal signals. In the example shown in FIG. 1A, two row antennas and two column antennas provide four junctions. According to some embodiments of the present disclosure, an alternate pattern 250 is provided. Pattern 250 (FIG. 1B) includes four antennas 150 that provide nine junctions from which input can be detected based on mutual capacitance detection or self capacitance detection. The number of antennas in each of patterns 150 and 250 is the same although the resolution provided by pattern 250 is more than twice the resolution provided by pattern 150. Optionally, the number of junctions provide by pattern 250 is more than (N/2)^2. Optionally, the number of junctions provided by pattern 250 is at least N^{∗}(N-1)/2 where N is the number of antennas 150. According to some embodiments of the present invention, all four antennas 150 extend from edge 101 and connect to circuitry from edge 101. Sensing area 100 can therefore extend to substantially a full width of display area 300. Area 305 accommodating metal tracing is only required along one edge, e.g. edge 101.##In some exemplary embodiments, the number of antennas, N, used to form J junctions is N=ceiling((1+sqrt(1+8^{∗}J))/2).

In some exemplary embodiments, antennas 150 extend from edge 101 toward neighboring edges 102, form bends 205 and extend in another direction, e.g. toward edge 103. Typically, antennas 150 reflect off edges 102 and bends 205 occur along edges 102. An angle of antennas 150 typically depends on size and aspect ratio of sensing area 100. Antennas 150 are typically longer than antennas 151 and 152 and cross with more antennas. During mutual capacitive detection, each of antennas 150 is triggered with a signal, one at a time, and in response all of the antennas are sampled. Typically, each antenna that is triggered is also sampled in response to triggering. Optionally, more than one antenna can be triggered at a time when triggering with orthogonal signals. Optionally, antennas are simultaneously triggered by injecting signals into antennas 150 with different frequencies and/or phases. When operating the sensor for self-capacitance detection, all antennas can be triggered and sampled simultaneously. Optionally, self-capacitance detection is performed on only a portion of antennas 150 at a time.

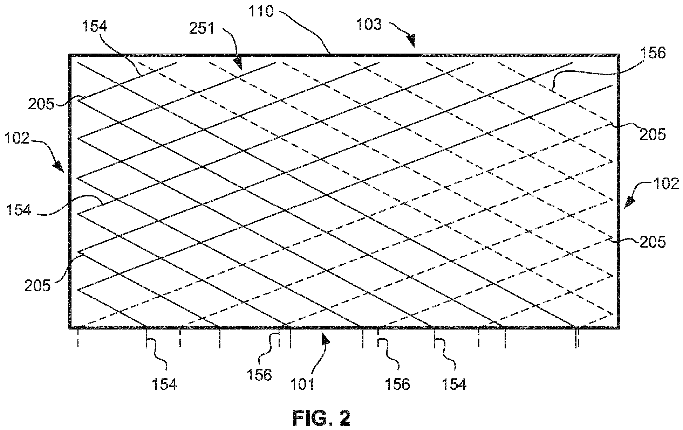

Reference is now made to FIG. 2 showing a simplified schematic drawing of an exemplary grid pattern for a digitizer sensor in a landscape configuration in accordance with some embodiments of the present disclosure. In some exemplary embodiments, a landscape pattern 110 includes a first array of antennas 156 extending from edge 101 to one of the neighboring edges 102 and bending toward edge 103 and a second array of antennas 154 extending from edge 101 to the other of the neighboring edges 102 and bending toward edge 103. Antennas from array 156 cross with other antennas from array 156 and also cross with antennas from array 154. Similarly antennas from array 154 cross with other antennas from array 154 and also cross with antennas from array 156. In the example shown, 13 antennas are patterned to provide more than 80 junctions. Typically, in a row and column grid, 18-20 antennas would be required to form 80 junctions. The reduction in the number of antennas is substantial and therefore less circuitry is required to support detection with such a sensor.

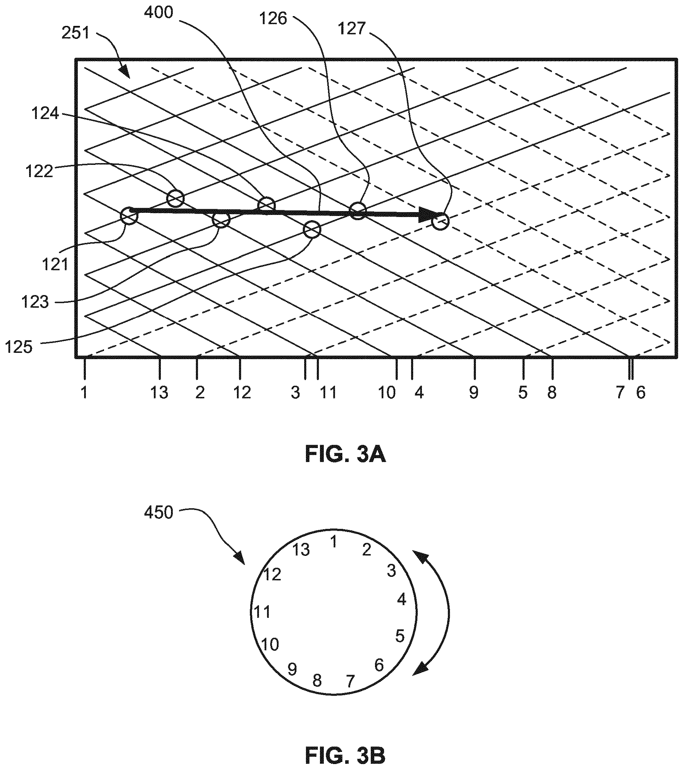

Reference is now made to FIGS. 3A and 3B showing simplified schematic drawings identifying exemplary junctions of an exemplary grid pattern of a digitizer sensor receiving input and a numbering system for tracking movement across the digitizer sensor based on the inputs, all in accordance with some embodiments of the present disclosure. As an object moves across a sensor pattern 251 over a path 400, changes in capacitive coupling are detected at junctions near path 400. The object can be a fingertip or other object that capacitively couples with sensor pattern 251. Optionally, the object is a stylus or other object that emits a signal and sensor pattern 251 picks up the signal. For example, changes in capacitive coupling indicating interaction are detected at junctions 121, 122, 123, 124, 125, 126 and 127. Optionally, antennas in array 154 are numbered in a consecutive ascending order from 1 to N, where N is the number of antennas in array 154 and antennas in array 156 are numbered in consecutive descending order from N-1 to 1. Optionally, numbering the antennas in such a manner provides intuitive coordinates for junctions, e.g. junctions 121-127. When using such a convention, junction 121 is defined by coordinates (10, 11), junction 122 is defined by coordinates (9, 11), junction 123 is defined by coordinates (9, 12), junction 124 is defined by coordinates (8, 12), junction 125 is defined by coordinates (8, 13), junction 126 is defined by coordinates (7, 13) and junction 127 is defined by coordinates (6, 1). In this manner coordinates following horizontal path 400 have a smooth slope. This convention also provides the same type of intuitive coordinates for movement in a vertical direction. Referring now to FIG. 3B, a dial representation 450 of coordinate labeling demonstrates how the coordinates change with movement in direction 400. In response to horizontal movement, for example, the first coordinate of the pair will advance in a counter-clock wise direction while the second coordinate will advance in a clockwise direction.

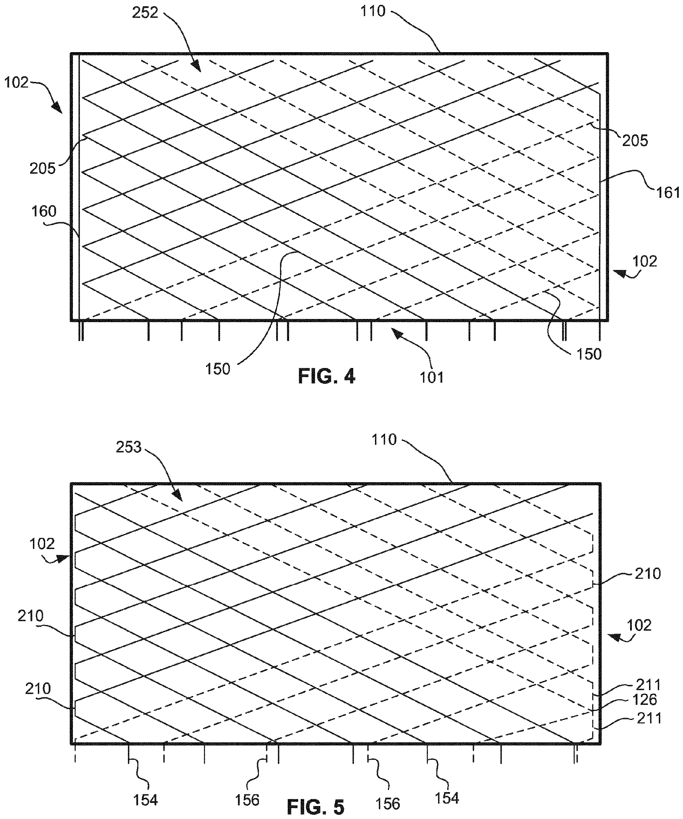

Reference is now made to FIG. 4 showing a simplified schematic drawing of an exemplary grid pattern including sensing lines that improve resolution near edges of the sensing area in accordance with some embodiments of the present disclosure. In some exemplary embodiments, a sensor pattern 252 includes a plurality of diagonally extending antennas that reflect off edges 102 and also includes additional antenna 160 and 161 that generally extend along edges 102 to add additional junctions near the edges 102. By adding antennas 160 and 161, bends 205 operate as junctions and input at bends 205 can be detected based on capacitive coupling between each of bends 205 and antennas 160 or 161. Optionally, antenna 161 can also include a bend and add resolution at the corners of sensing area 110. Optionally, since each of antennas 160 and 161 form junctions with a different set of antennas, antenna 160 and antenna 161 can be connected and operate as a single antenna.

Reference is now made to FIG. 5 showing a simplified schematic drawing of an exemplary diagonal grid pattern with improved resolution along edges in accordance with some embodiment of the present disclosure. Optionally, resolution near edges 102 is improved by forming truncating bends 210 along edges 102. The truncated portions extend parallel to edges 102. Truncating the bends increases proximity of the junctions to edges 102 so that touch can be detected near the edges. Alternatively, some or all the truncated portions, e.g. truncated portions 211 can be brought in proximity to one another to form a junction 126 between them.

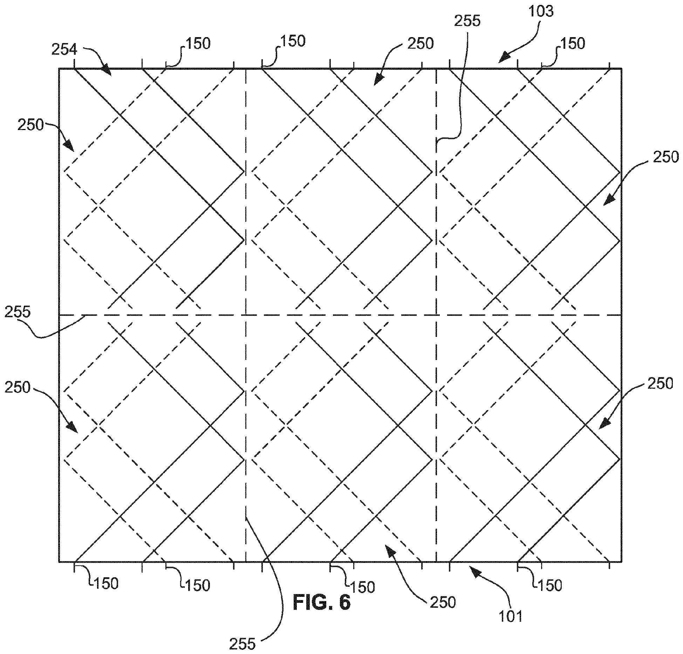

Reference is now made to FIG. 6 showing a simplified schematic drawing of an exemplary grid pattern formed from a plurality of independent sensing sections in accordance with some embodiments of the present disclosure. According to some embodiments of the present disclosure, a sensing pattern 250 is repeated to form a larger sensing pattern 254. Alternatively, different sensing patterns may be used to form larger sensing pattern 254. Typically, at least a portion of the sensing patterns are formed with antennas that extend from a same edge so that other sensing patterns can be positioned around the three other edges of the sensing pattern.

Optionally, the sensing patterns are aligned and proximity between the sensing patterns 250 can be defined so that sensing junctions are formed along partitions 255, e.g. virtual partitions between patterns 250 so that junctions can be formed between the patterns. Optionally, the sensing patterns may be aligned to connect to one another. Each of patterns 250 may be operated separately to detect input over a defined area or the patterns 250 may be operated simultaneously to detect input over the entire sensing area. This arrangement can be used to form a large sensing area without compromising measurement accuracy and increasing power demand to accommodate substantially longer antennas. Such arrangement provides a modular solution with a multiplicity of form factors using a limited number of building blocks.

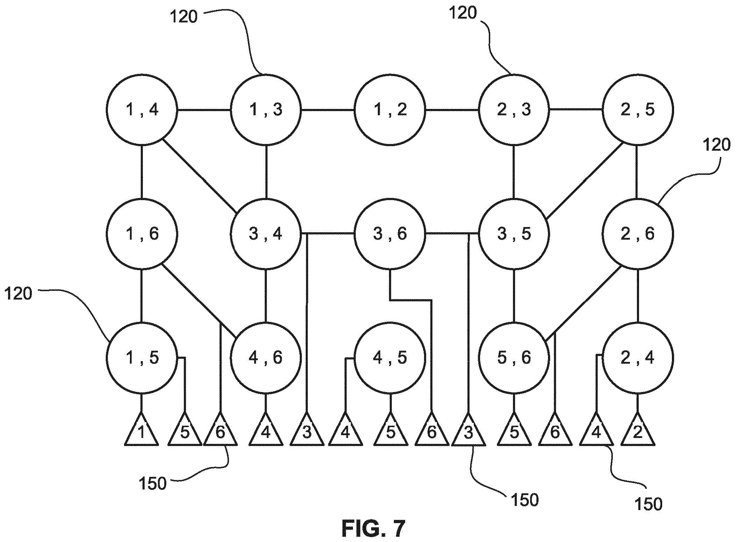

Reference is now made to FIG. 7 showing a schematic illustration of exemplary junctions for a grid pattern of a digitizer sensor in accordance with some embodiments of the present disclosure. Although most of the sensor patterns described in the present disclosure are formed from diagonal antennas that extend toward an edge and then bend, other patterns can be defined where each antenna crosses most or all other antennas once so that the number of antennas in relation to the number of junctions may be optimized. In the example shown in FIG. 7, 15 junctions are formed with only 6 antennas and each antenna crosses with all other antennas once. Different patterns may be formed to define the junctions as shown in FIG. 7.

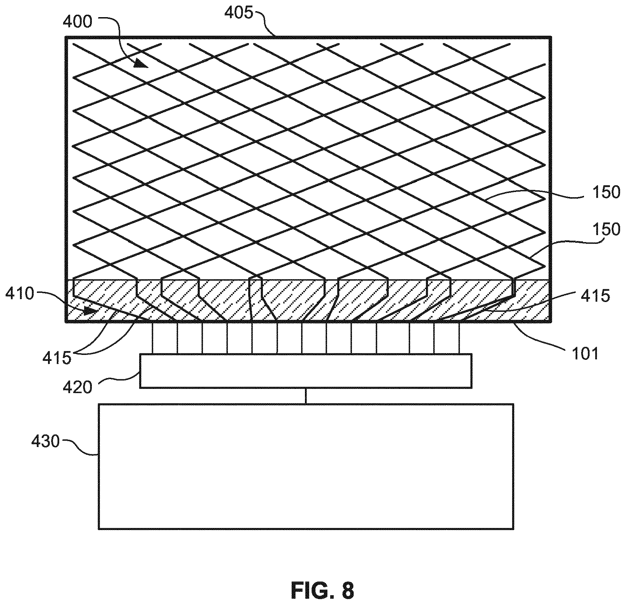

Reference is now made to FIG. 8 showing a simplified block diagram of a digitizer system in accordance with some embodiments of the present disclosure. According to some embodiments of the present disclosure, an electronic display is integrated with a grid based capacitive sensor 400. In some exemplary embodiments, each of the antennas 150 extend from one edge 101 and connect to metal traces 415 on display 405. Typically, black print 410 is used to cover an area including metal traces 415. Typically, metal traces 415 connect to circuit 420 including an application specific circuit (ASIC) or a printed circuit board (PCB) including one or more ASICS. Circuit 420 controls and operates sensor 400. Output from sensor 400 is typically reported to host 430. Optionally, host 430 communicates with circuit 420 and provides commands for operating sensor 400. Typically, a digitizer system includes sensor 400 together with circuit 420. Optionally, some or all functionality of circuit 420 is integrated into host 430.

According to some embodiments of the present disclosure, sensor 400 together with circuit 420 is operated to track input by one or more fingers, styluses, conductive objects and dielectric objects. Typically, sensor 400 can detect both touch and hover of the objects. In some exemplary embodiments, sensor 400 is a transparent sensor and antennas 150 are optionally formed from indium tin oxide (ITO).

## Claims

1. A sensor comprising:
a sensing area (100) confined by a plurality of edges (101,102,103);
a plurality of antennas (150) spread across the sensing area (100) and that cross each other to form a grid of junctions (120), wherein the grid of junctions includes more than H^{∗}V junctions and wherein the plurality of antennas includes H+V antennas (150); wherein H is an integer number and V is an integer number,
the sensor being **characterised in that** the plurality of antennas comprise a first and second portion of antennas,
wherein each of a first portion of the plurality of antennas (150) forms a continuous path that extends diagonally from one edge (101) toward a first neighboring edge (102) in the sensing area (100) and then continues to extend away from the first neighboring edge (102) in the sensing area to form a bend (205) in the sensing area (100); and
wherein each of a second portion of the plurality of antennas (150) forms a continuous path that extends diagonally from the one edge (101) toward a second neighboring edge (102) in the sensing area (100) and then continues to extend away from the second neighboring edge (102) in sensing area to form a bend (205) in the sensing area (100); and
wherein antennas (150) from the first portion form junctions (120) with antennas (150) from the second portion and the first portion.

2. The sensor of claim 1, wherein the plurality of antennas (150) extend from only one of the edges (101) (02) of the sensing area (100).

3. The sensor of claim 1 or claim 2, wherein the plurality of antennas (150) cross each other only once.

4. The sensor of any one of claims 1-3, wherein at least one of the plurality of antennas (150) crosses all other of the plurality of antennas (150).

5. The sensor of any one of claims 1-4, wherein the number of junctions (120) formed from the plurality of antennas (150) is greater than (N/2)^2, wherein N is the number of the plurality of antennas (150).

6. The sensor of any one of claims 1-5, wherein a length of the one edge (101) is X and a length of the first neighboring edge (102) is Y and wherein the angle between a diagonally extending antenna (150) from the plurality and the one edge (101) either equals or is greater than an arctangent (Y/X).

7. The sensor of any one of claims 1-6, wherein the plurality of antennas (150) include a first antenna (150) extending along the first neighboring edge (102) and forming junctions (120) with the first portion.

8. The sensor of any one of claims 1-7, wherein the first portion partially extends along the first neighboring edge (102).

9. The sensor of any one of claims 1-8, wherein the plurality of antennas (150) are patterned on a single layer.

10. The sensor of any one of claims 1-9, wherein the sensor is configured to sense input from an object that interacts with the sensor and emits a signal.

11. The sensor of any one of claims 1-10, comprising a plurality of distinct sensing areas, wherein the sensing area (100) is one of the plurality of distinct sensing areas (100).

12. The sensor of claim 11, wherein the sensing area (100) is configured to be operated independently from other sensing areas (100) of the plurality of sensing areas (100).

## Patentansprüche

1. Sensor, umfassend:
einen Erfassungsbereich (100), der durch eine Vielzahl von Rändern (101, 102, 103) begrenzt ist;
eine Vielzahl von Antennen (150), die über den Erfassungsbereich (100) verteilt sind und die einander kreuzen, um ein Gitter von Verbindungsstellen (120) zu bilden, wobei das Gitter von Verbindungsstellen mehr als H^{∗}V Verbindungsstellen beinhaltet und wobei die Vielzahl von Antennen H+V Antennen (150) beinhaltet; wobei H eine ganze Zahl ist und V eine ganze Zahl ist,
wobei der Sensor **dadurch gekennzeichnet ist, dass** die Vielzahl von Antennen einen ersten und zweiten Teil von Antennen umfasst,
wobei jeder eines ersten Teils der Vielzahl von Antennen (150) einen kontinuierlichen Pfad bildet, der sich diagonal von einem Rand (101) zu einem ersten benachbarten Rand (102) in dem Erfassungsbereich (100) erstreckt und dann fortfährt, sich von dem ersten benachbarten Rand (102) in dem Erfassungsbereich weg zu erstrecken, um eine Krümmung (205) in dem Erfassungsbereich (100) zu bilden; und
wobei jeder eines zweiten Teils der Vielzahl von Antennen (150) einen kontinuierlichen Pfad bildet, der sich diagonal von dem einem Rand (101) zu einem zweiten benachbarten Rand (102) in dem Erfassungsbereich (100) erstreckt und dann fortfährt, sich von dem zweiten benachbarten Rand (102) in dem Erfassungsbereich weg zu erstrecken, um eine Krümmung (205) in dem Erfassungsbereich (100) zu bilden; und
wobei Antennen (150) von dem ersten Teil Verbindungsstellen (120) mit Antennen (150) aus dem zweiten Teil und dem ersten Teil bilden.

2. Sensor nach Anspruch 1, wobei sich die Vielzahl von Antennen (150) von nur einem der Ränder (101) (02) des Erfassungsbereichs (100) erstreckt.

3. Sensor nach Anspruch 1 oder Anspruch 2, wobei die Vielzahl von Antennen (150) einander nur einmal kreuzen.

4. Sensor nach einem der Ansprüche 1-3, wobei mindestens eine der Vielzahl von Antennen (150) alle anderen der Vielzahl von Antennen (150) kreuzt.

5. Sensor nach einem der Ansprüche 1-4, wobei die Anzahl von Verbindungsstellen (120), die aus der Vielzahl von Antennen (150) gebildet ist, größer als (N/2)^2 ist, wobei N die Anzahl der Vielzahl von Antennen (150) ist.

6. Sensor nach einem der Ansprüche 1-5, wobei eine Länge des einen Rands (101) X ist und eine Länge des ersten benachbarten Rands (102) Y ist und wobei der Winkel zwischen einer sich diagonal erstreckenden Antenne (150) von der Vielzahl und dem einen Rand (101) entweder gleich oder größer als eine Bogentangente (Y/X) ist.

7. Sensor nach einem der Ansprüche 1-6, wobei die Vielzahl von Antennen (150) eine erste Antenne (150) beinhaltet, die sich entlang des ersten benachbarten Rands (102) erstreckt und Verbindungsstellen (120) mit dem ersten Teil bildet.

8. Sensor nach einem der Ansprüche 1-7, wobei der erste Teil sich teilweise entlang des ersten benachbarten Rands (102) erstreckt.

9. Sensor nach einem der Ansprüche 1-8, wobei die Vielzahl von Antennen (150) auf einer einzigen Schicht strukturiert ist.

10. Sensor nach einem der Ansprüche 1-9, wobei der Sensor konfiguriert ist, Eingang von einem Objekt zu erfassen, das mit dem Sensor interagiert und ein Signal aussendet.

11. Sensor nach einem der Ansprüche 1-10, umfassend eine Vielzahl von getrennten Erfassungsbereichen, wobei der Erfassungsbereich (100) einer der Vielzahl von getrennten Erfassungsbereichen (100) ist.

12. Sensor nach Anspruch 11, wobei der Erfassungsbereich (100) konfiguriert ist, unabhängig von anderen Erfassungsbereichen (100) der Vielzahl von Erfassungsbereichen (100) betrieben zu werden.

## Revendications

1. Capteur comprenant :
une zone de captage (100) confinée par une pluralité de bords (101, 102, 103) ;
une pluralité d'antennes (150) étalées sur la zone de captage (100) et qui se croisent pour former une grille de jonctions (120), dans lequel la grille de jonctions inclut plus de H^{∗}V jonctions et dans lequel la pluralité d'antennes inclut H+V antennes (150) ; dans lequel
H est un nombre entier et V est un nombre entier,
le capteur étant **caractérisé en ce que** la pluralité d'antennes comprennent une première et une seconde portion d'antenne,
dans lequel chacune d'une première portion de la pluralité d'antennes (150) forme un trajet continu qui s'étend en diagonale depuis un bord (101) vers un premier bord voisin (102) dans la zone de captage (100) et puis continue de s'étendre loin du premier bord voisin (102) dans la zone de captage pour former un coude (205) dans la zone de captage (100) ; et
dans lequel chacune d'une seconde portion de la pluralité d'antennes (150) forme un trajet continu qui s'étend en diagonale depuis le un bord (101) vers un second bord voisin (102) dans la zone de captage (100) et puis continue de s'étendre loin du second bord voisin (102) dans la zone de captage pour former un coude (205) dans la zone de captage (100) ; et
dans lequel des antennes (150) de la première portion forment des jonctions (120) avec des antennes (150) de la seconde portion et la première portion.

2. Capteur selon la revendication 1, dans lequel la pluralité d'antennes (150) s'étendent seulement depuis l'un des bords (101) (02) de la zone de captage (100).

3. Capteur selon la revendication 1 ou la revendication 2, dans lequel la pluralité d'antennes (150) se croisent une fois seulement.

4. Capteur selon l'une quelconque des revendications 1-3, dans lequel au moins l'une de la pluralité d'antennes (150) croise toutes les autres de la pluralité d'antennes (150).

5. Capteur selon l'une quelconque des revendications 1-4, dans lequel le nombre de jonctions (120) formées à partir de la pluralité d'antennes (150) est supérieur à (N/2)^2, dans lequel N est le nombre de la pluralité d'antennes (150).

6. Capteur selon l'une quelconque des revendications 1-5, dans lequel une longueur du un bord (101) est X et une longueur du premier bord voisin (102) est Y et dans lequel l'angle entre une antenne s'étendant en diagonale (150) depuis la pluralité et le un bord (101) soit est égal soit est supérieur à une arc-tangente (Y/X).

7. Capteur selon l'une quelconque des revendications 1-6, dans lequel la pluralité d'antennes (150) incluent une première antenne (150) s'étendant le long du premier bord voisin (102) et formant des jonctions (120) avec la première portion.

8. Capteur selon l'une quelconque des revendications 1-7, dans lequel la première portion s'étend partiellement le long du premier bord voisin (102).

9. Capteur selon l'une quelconque des revendications 1-8, dans lequel la pluralité d'antennes (150) sont disposées sur une seule couche.

10. Capteur selon l'une quelconque des revendications 1-9, dans lequel le capteur est configuré pour capter une entrée depuis un objet qui interagit avec le capteur et émet un signal.

11. Capteur selon l'une quelconque des revendications 1-10, comprenant une pluralité de zones de captage distinctes, dans lequel la zone de captage (100) est l'une de la pluralité de zones de captage (100) distinctes.

12. Capteur selon la revendication 11, dans lequel la zone de captage (100) est configurée pour fonctionner indépendamment d'autres zones de captage (100) de la pluralité de zones de captage (100).
